# EUROPEAN PATENT SPECIFICATION

(11) **EP 3 943 039 B1**
(45) Date of publication and mention of the grant of the patent: **30.08.2023**
(21) Application number: 21186968.0
(22) Date of filing: 21.07.2021
(51) Int. Cl.: A61C 7/36

(54) **MANDIBULAR REPOSITIONING APPLIANCES AND METHODS OF MANUFACTURING THE SAME**
GERÄTE ZUR MANDIBULÄREN REPOSITIONIERUNG UND VERFAHREN ZUR HERSTELLUNG DAVON
APPAREILS DE REPOSITIONNEMENT MANDIBULAIRE ET LEURS PROCÉDÉS DE FABRICATION

(30) Priority: 22.07.2020 US 202016936302
(43) Date of publication of application: 26.01.2022
(73) Proprietor: ClearCorrect Operating, LLC, Round Rock, TX 78665 (US)
(72) Inventor: MAH, James, Las Vegas NV Nevada 89109 (US)
(74) Representative: Michalski Hüttermann & Partner Patentanwälte mbB

(56) References cited:
- WO-A1-2020/123592
- AU-A1- 2017 332 257
- CN-A- 108 113 780

## Description

### FIELD

Embodiments relate to mandibular repositioning appliances, and in particular to mandibular repositioning appliances customized according to the patient's specific tooth and jaw anatomy.

### BACKGROUND

Individuals with less than ideal bite relationships often seek orthodontic treatments. Data from the third National Health and Nutrition Examination Survey (NHANES III) report that approximately 20% of the population have deviations from the ideal bite relationship (see, Proffit WR, Fields Jr HW, Moray LJ. Prevalence of Malocclusion and Orthodontic Treatment Need in the United States; Estimates from the NHANES III Survey. Int J Adult Orthodon Orthognath Surg. 1998; 13(2);97-106). This prevalence is consistent with global data that show approximately 74.7% of people have normal bite relationships while 25.3% are not ideal (see, Alhammadi MS, Halboub E, Fayed MS, Labib A, El-Saaidi C. Global Distribution of Malocclusion Traits: A Systematic Review. Dental Press J Orthod. 2018;23(6)40.e1-40.e10).

Depending on the nature of the malocclusion, treatments may entail a variety of approaches and appliances, which may include extractions, growth modification, dental arch expansion, orthodontic treatment and jaw surgery. One of these approaches generally involves repositioning the jaw to a corrected or improved position.

Appliances for repositioning the jaw are historic and numerous. Some appliance designs are meant to simply dis-occlude the teeth and prevent them from contacting. These are commonly referred to as bite plates or bite planes. Other designs have channels to direct eruptive tooth movements in an anterior or posterior direction as indicated to help overcome the mal-relationship of the jaws. These are known as activators or bionators. Yet other designs have active components such as springs to push the jaw into a new position. An example of this design is the Herbst appliance. Another design approach, such as disclosed in US Patent 5,443,384, includes a two piece appliance with inclined planes on complementary blocks that interface between the upper and lower jaws so that when the patient bites down, the inclined planes of each block or piece contact and redirect the jaw to a new position. These appliances are commonly referred to as twin-block appliances. Furthermore, this entire group of appliances are commonly referred to as functional appliances or dentofacial orthopedic devices. Further features of dental devices are disclosed in CN108113780A.

Although functional appliances are in common use, their design remains generic with respect to geometric dimensions of the active components. With respect to the bite plate/plane appliance and the design of the bite pad in it, the amount of appliance activation may be inappropriate for an individual if there is either insufficient dimensions (insufficient height) or excessive dimensions (too high) such that the patient experiences discomfort and is unable to tolerate and wear the appliance. Furthermore, due to the differences in individuals and sizes of the jaws as well as the different shapes of their condyles, the point of jaw rotation generally differs between individuals. The generic dimension of the bite pad may be insufficient to provide the desired amount of dis-occlusion or worse, may cause excessive amounts to overcome the adaptive ability of the patient's masticatory system and cause signs and symptoms such as jaw muscle ache, headaches, neck pain, temporomandibular joint dysfunction, tooth discomfort, tooth ache and others.

Accordingly, it is desirable to provide improved mandibular repositioning appliances and method of manufacturing the same.

### SUMMARY

The present embodiments provide improved mandibular repositioning appliances and methods of manufacturing the same. In particular, the present embodiments provide improved appliances that are customized according to the patient's specific tooth and jaw anatomy.

A specific personalized design of the dis-articulating component, the bite pad, based on the patient's natural anatomy which includes the contours of the teeth and the shape of their jaw joints provides information to design customized appliances for individuals to obtain desired clinical effects. Accordingly, the present embodiments provide a novel method to design a mandibular repositioning appliance which utilizes the patient's individual tooth and j aw j oint anatomy.

Certain embodiments provide mandibular repositioning appliances customized based on the anatomical slopes provided by the maxillary incisors and/or the articulating surface of the mandibular condyles of the patient.

According to an embodiment, a method of fabricating at least one removable orthodontic appliance for repositioning a mandible of an individual is provided. The method includes acquiring a digital model of a dentition and/or a craniofacial anatomy of the individual, the digital model including a representation of a condyle or an incisal guidance or both the condyle and the incisal guidance. The method also includes calculating, based on the digital model, a slope of the condyle or a slope of the incisal guidance or both the slope of the condyle and the slope of the incisal guidance by selecting at least two points (x₁, x₂, y₁ and y₂) on the incisal guidance and/or the mandibular condyle, and fabricating at least one removable orthodontic appliance including a feature configured to constrain a posterior or anterior movement of the mandible relative to the maxillae when worn by the individual, wherein a position of the feature is determined based on the slope of the condyle or the slope of the incisal guidance or both the slope of the condyle and the slope of the incisal guidance.

According to another embodiment, a removable orthodontic appliance configured to reposition a mandible of an individual is provided. The appliance includes a structure configured to mate with a geometry of a maxillary dentition and adjacent gum tissue of the individual, and a feature configured to constrain a posterior or anterior movement of the mandible relative to the maxillae when the appliance is worn by the individual, wherein the feature is located on the structure in a position based on a slope of a condyle of the individual or a slope of an incisal guidance of the individual or both the slope of the condyle and the slope of the incisal guidance.

According to yet another embodiment, a removable orthodontic appliance pair configured to reposition a mandible of an individual is provided. The appliance pair includes a first structure configured to mate with a geometry of a maxillary dentition and adjacent gum tissue of the individual, the first structure including a first feature located on an external surface of the first structure. The appliance pair also includes a second structure configured to mate with a geometry of a mandibular dentition and adjacent gum tissue of the individual. The first feature is located on the first structure in a position based on a slope of a condyle of the individual or a slope of an incisal guidance of the individual or both the slope of the condyle and the slope of the incisal guidance, wherein the slope of the condyle or a slope of the incisal guidance or both the slope of the condyle and the slope of the incisal guidance are calculated by selecting at least two points (x₁, x₂, y₁ and y₂) on the incisal guidance and/or the mandibular condyle.. The first feature is configured to constrain a posterior or anterior movement of the mandible relative to the maxillae when the appliance pair is worn by the individual. In certain aspects, the first feature includes a barb or hook type element, and the second structure includes a second feature located on an external surface of the second structure, and the second feature includes a complementary barb or hook type element configured to removably engage with the barb or hook type element of the first feature.

According to an embodiment, a tangible, non-transitory computer-readable medium is provided that has instructions thereon which, upon being executed by one or more processors, alone or in combination, provide for execution of methods described herein, such as, for example, methods for determining positional coordinates of the condyle and/or the incisal guidance, and calculating a slope of the condyle and/or a slope of the incisal guidance of an individual, based on a digital model of the dentition and/or craniofacial anatomy of the individual, and creating a digital file for use in fabricating a dental appliance or dental appliance pair or series of dental appliances or appliance pairs. An example of a digital file includes an STL file for use in 3-D printing a dental appliance or dental appliance pair.

The scope of the present invention is defined by independent claims 1, 12, and 14. Further features and advantages of the present invention, as well as the structure and operation of various embodiments of the present invention, are described in detail below with respect to the accompanying drawings. In the drawings, like reference numbers indicate identical or functionally similar elements.

### BRIEF DESCRIPTION OF THE DRAWINGS

The detailed description is described with reference to the accompanying figures. The use of the same reference numbers in different instances in the description and the figures may indicate similar or identical items.
**FIG. 1** illustrates a method of repositioning a mandible of an individual according to an embodiment.
FIG. 2A illustrates a cross-sectional view of a mandibular condyle and zygomatic process of an individual;
FIG. 2B illustrates a cross-sectional view of a maxillary incisor of an individual;
**FIG. 3A** illustrates a cross-sectional view of an example of a mandible of an individual, including a representation of the condylar slope in relation to the incisal slope.
**FIG. 3B** illustrates a cross-sectional view of an example of a mandible of a different individual, including a representation of the condylar slope in relation to the incisal slope;
**FIG. 4** illustrates a cross-sectional view of a maxillary appliance according to an embodiment, as worn by an individual; and
**FIG. 5** illustrates a cross-sectional view of an appliance pair including removable maxillary appliance 50 and complementary removable mandibular appliance 55, according to an embodiment, as worn by an individual.

### DETAILED DESCRIPTION

The present disclosure provides mandibular repositioning appliances and methods of manufacturing the same. The mandibular appliances of the present disclosure are advantageously customized based on the anatomical slopes of the patient's maxillary incisors and/or the articulating surface of the patient's mandibular condyles.

According to various embodiments, optimized dental appliances for repositioning of the individual's mandible relative to the maxilla and improving the individual's bite are designed according to the individual's unique craniofacial and dental anatomy to determine the coordinate changes in repositioning the mandible. The appliances contain the geometry of the dentition and adjacent gum tissues and may include constraining features designed to provide a biasing force created by the muscles of mastication when worn by the individual. For example, the constraining features may be configured to provide a biasing force that constrains a posterior or anterior movement of the mandible relative to the maxillae when worn by the individual.

In certain aspects, a series of removable appliances may be designed, with positional increments of biasing features to promote mandibular movement from an initial position to a new, desired position as directed by a dentist.

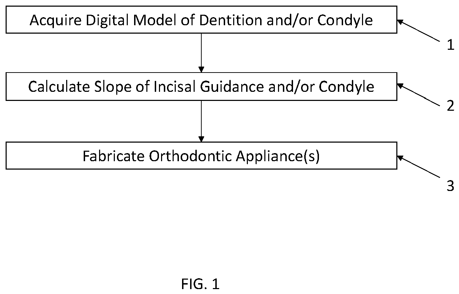

**FIG. 1** illustrates a method of repositioning a mandible of an individual according to an embodiment. At step 1, a digital model of the dentition and/or a craniofacial anatomy of the individual is acquired. The unique craniofacial and dental anatomy may be obtained by imaging the individual's dentition and/or craniofacial anatomy using various imaging modalities such as radiographic, MRI, ultrasound or direct scanning technologies (e.g., via intra-oral scanning or scanning a mold of the individual's dentition). In certain aspects, the same imaging system is used to acquire an image of both the dentition and the craniofacial anatomy of the individual, for example radiographic imaging or cone-beam computed tomography (CBCT) or MRI or Ultrasound imaging or other imaging system may be used to acquire an image of the dentition and the craniofacial anatomy proximal the mandibular condyle.

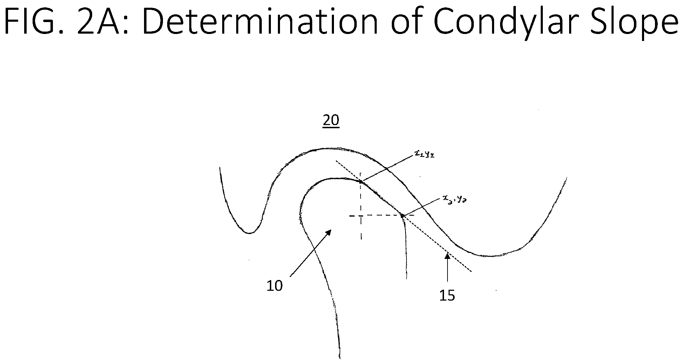

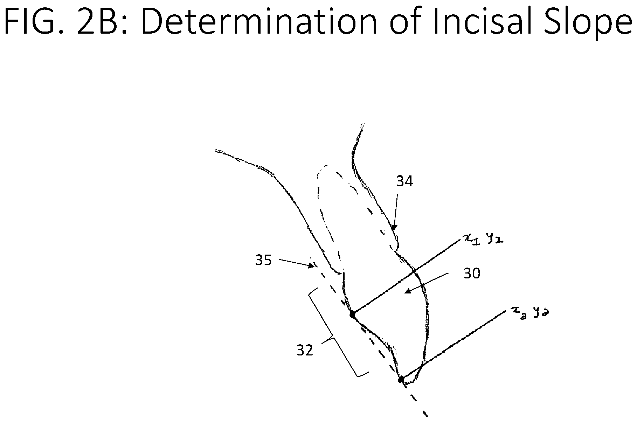

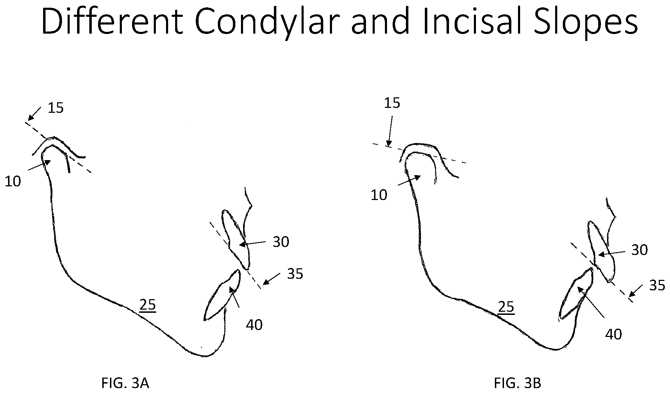

It should be appreciated that different imaging technologies may be used to acquire images of the dentition and the craniofacial anatomy proximal the mandibular condyle. A common point or points in different images of the dentition and the craniofacial anatomy may be identified to facilitate image combination. For example, the digital model may a combination of a radiographic image of the condyle and an intra-oral scanned image of the dentition. Once the image or images are acquired, the image(s) may be stored to a memory of a computer or processing system and rendered on a display device for viewing by a dentist or other user. The digital model presented on the display device may include a representation of the mandibular condyle or an incisal guidance or both the condyle and the incisal guidance. **FIGS. 2A****,** **2B****,** **3A** and **3B** show example representations that may be displayed on a display device. A user interface (UI) may be provided to allow the user to interact with the digital model presented on the display. For example, a mouse, pen, keyboard or other device may be used to enable control of a cursor or pointer or other user-interface elements and to enable selection of portions of the rendered digital model.

At step 2, a slope of the condyle or a slope of the incisal guidance or both the slope of the condyle and the slope of the incisal guidance are calculated based on the digital model. For example, in an embodiment, a slope is automatically calculated based on relevant points (positional coordinates) in the digital model of the condyle and/or incisor. The relevant points may be automatically determined or identified by the processing system or the relevant points may be identified or selected by a user, e.g., using the user interface to manually select points on the condyle and/or incisor from which to determine the slope(s). In some embodiments, the processing system may automatically determine and identify multiple points on the condyle and/or the incisor from which the user may select for use in determining the slope(s). In other embodiments, the processing system may automatically determine and identify multiple points on the condyle and/or the incisor and also automatically calculate the slope(s) using a best fit equation or algorithm taking the multiple points as input. In other embodiments, other equations or algorithms for determining or calculating the slope may be used as would be apparent to one skilled in the art.

**FIG. 2A** illustrates a cross-sectional view of an example of a mandibular condoyle 10 and temporal fossa 20 of an individual. Two relevant points that may be used for determining the condylar slope 15, according to an embodiment, as shown in the arbitrary X-Y plane of the cross-sectional view of **FIG. 2A****,** are identified with the coordinates (X₁, Y₁) and (X₂, Y₂). For example, in some embodiments, the relevant points may be input or selected by a user, such as, for example, by a user viewing a digital representation of the individual's jaw anatomy displayed on a user interface (UI) and selecting the relevant points using a mouse, keyboard or other implement configured to interface with the user interface and provide point selection capability to the user. In other embodiments, the relevant points may be automatically determined or calculated. Machine learning algorithms may be implemented and trained to facilitate automatic selection or identification of the relevant points used to determine the condylar slope 15.

**FIG. 2B** illustrates a cross-sectional view of an example of a maxillary incisor 30 of an individual with surrounding gum tissue 34. The slope 35 of the incisal guidance (also herein "incisal slope 35") may be calculated based on relevant points of the lingual surface 32 of maxillary incisor 30. Incisor 30 will typically be a central maxillary incisor, but may include a lateral maxillary incisor. Two points on the lingual surface 32 that may be used for determining the incisal slope 35, according to an embodiment, as shown in the arbitrary X-Y plane of the cross-sectional view of **FIG. 2B****,** are identified with the coordinates (X₁, Y₁) and (X₂, Y₂). For example, in some embodiments, the relevant points may be input or selected by a user, such as, for example, by a user viewing a digital representation of the dentition displayed on a user interface (UI) and selecting the two points using a mouse, keyboard or other implement configured to interface with the user interface and provide point selection capability to the user. In other embodiments, the two relevant points may be automatically determined or calculated. Machine learning algorithms may be implemented and trained to facilitate automatic selection or identification of the relevant points used to determine the incisal slope 35.

Each of the slope 15 of the condyle and slope 35 of the incisal guidance can be determined using the equation m = (Y₂-Y₁)/(X₂-X₁), where m is the slope and X₁, Y₁, X₂ and Y₂ are the relevant positional coordinates of the condyle 10 or the incisal guidance. In other embodiments, multiple relevant points may be determined or identified and a best fit equation or algorithm may be used to determine a slope using more than two relevant points.

**FIG. 3A** illustrates a cross-sectional view of an example of a mandible 25 of an individual, including a representation of the condylar slope 15 of condyle 10 in relation to the incisal slope 35 of maxillary incisor 30. A mandibular incisor 40 is also shown. **FIG. 3B** illustrates a cross-sectional view of an example of a mandible 25 of a different individual, including a representation of the condylar slope 15 of condyle 10 in relation to the incisal slope 35 of maxillary incisor 30. In certain embodiments, the condylar slope and the incisal slope are treated as independent variables such that either slope, or both slopes, may be used to design an appliance. As can be seen in **FIG. 3A** and **FIG. 3B****,** the relative slopes of the incisal guidance and the condyle differ between the different individuals, which may require that different biasing constraints be determined and implemented in the dental appliance(s) worn by each individual to correct the different bites of each individual. For example, the individual of **FIG. 3B** may require a different treatment plan, and possibly a longer-in-time treatment plan, based on needing a greater anterior displacement of the mandible when compared to the individual of **FIG. 3A** who appears to have a less-pronounced overjet.

Returning to **FIG. 1****,** at step 3, at least one removable orthodontic appliance is fabricated, with the orthodontic appliance including one or more constraining features configured to constrain a posterior or anterior movement of the mandible relative to the maxilla when worn by the individual. For example, one or multiple orthodontic appliances may be fabricated according to a treatment plan designed to correct the bite. A single maxillary appliance may be fabricated or series of maxillary appliances, with incremental changes, may be fabricated. A position or location or configuration of the constraining feature(s) is determined based on the condylar slope 15 or the slope 35 of the incisal guidance or both the condylar slope 15 and the slope 35 of the incisal guidance. The constraining feature(s) are positioned to preferentially constrain an anterior movement or a posterior movement of the mandible with respect to the maxillae and thereby promote a desired anterior or posterior repositioning of the mandible over time with respect to the maxillae as determined by a dentist or other user, where any force on the mandible is created by the muscles of mastication due to the biasing of the constraining features. In another embodiment, an orthodontic appliance pair (e.g., a maxillary appliance and a complementary mandibular appliance) may be fabricated, or a series of appliance pairs, with incremental changes, may be fabricated.

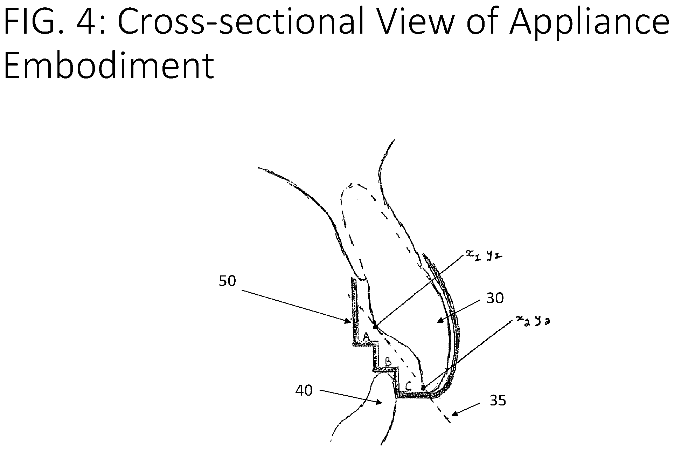

**FIG. 4** illustrates a cross-sectional view of a maxillary appliance 50 according to an embodiment, as worn by an individual. Maxillary appliance 50 includes a structure configured to mate with the geometry of the maxillary dentition and adjacent gum tissue of the individual. As shown, in an embodiment, maxillary appliance 50 includes a series of shelf or ridge features A, B and C proximal to the lingual surface of incisor 30. Each shelf or ridge feature may be designed, e.g., sized, to interact with and constrain mandibular incisor 40 when worn by the individual. The number and the size of the increments of the constraining features may be determined by a dentist or other user. For example, the maxillary appliance 50 may be designed with a single constraining feature, e.g., ridge A or B or C, or it may be designed with more than one constraining feature.

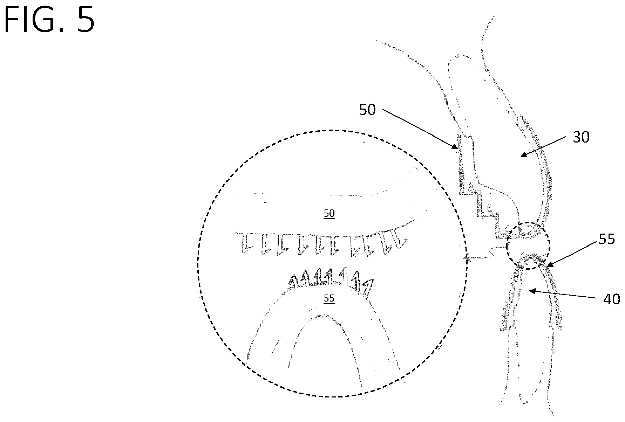

**FIG. 5** illustrates a cross-sectional view of an appliance pair including removable maxillary appliance 50 and complementary removable mandibular appliance 55, according to an embodiment, as worn by an individual. Complementary removable mandibular appliance 55 includes a structure configured to mate with the geometry of the mandibular dentition and adjacent gum tissue of the individual and is configured to interact with the constraining feature(s) of the maxillary appliance 50 to constrain the posterior or anterior movement of the mandible relative to the maxillae. For example, in an embodiment, a constraining feature of the maxillary appliance 50 includes one or multiple barb or hook elements, and the complementary removable maxillary appliance 55 includes one or multiple complementary barb or hook elements configured to removably engage with the one or multiple barb or hook elements of maxillary appliance 50. The constraining feature may include a geometry configured to interact and positively engage the opposing surface with shapes such as but not limited to opposing barbs or "J" hooks, or combinations such as barbs and inverted "U" shaped hooks or features such as may be found in Velcro^{™} material. Such geometries may be preferentially placed or located on selected opposing surfaces along the arch so that these opposing surfaces preferentially engage where desired, such surfaces on the maxillary appliance as exemplified in "A, B, or C" in **FIG. 4****.**

The barb or hook elements may be made of the same material as the appliances and should have sufficient resiliency to prevent separation once connected or engaged unless a threshold amount of lateral and/or posterior/anterior force is applied to the mandible by the wearing individual to separate or unhook the features to permit unhindered jaw movement.

In certain embodiments, a series or plurality of removable orthodontic appliances or orthodontic appliance pairs are fabricated. In certain embodiments, the position and/or orientation of the constraining feature(s) of each subsequent appliance or appliance pair may include an incremental positional and/or orientation change relative to the position and/or orientation of the constraining feature(s) of a prior appliance or appliance pair. A number of incremental positional changes and a size of each incremental positional change may be determined based on user input.

The complementary constraining features on maxillary appliance 50 and mandibular appliance 55 may be positioned and oriented so as to preferentially constrain an anterior movement or a posterior movement of the mandible with respect to the maxilla and thereby promote an anterior or posterior repositioning of the mandible over time with respect to the maxillae as determined by a dentist or other user. Any force on the mandible is created by the muscles of mastication due to the biasing of the constraining features rather than created directly by the appliances.

In certain embodiments, the occlusal area associated with the interacting geometries of the appliances and/or constraining feature(s) are customized for each individual, and the location in the arch (anterior, posterior) of the interacting geometries are customized for each individual. For example, an individual with an anterior open bite might have these interacting surfaces located in the posterior areas where there is occlusal contact. Alternatively an individual with posterior open bite, either naturally occurring or created with a bite plane or other appliance, might have these interacting surfaces in an anterior location.

In certain embodiments, each appliance (e.g., maxillary appliance 50 and mandibular appliance 55) may include a clear aligner fabricated using polymers or other clear material as is well known. In an embodiment, a dental appliance may be fabricated using a computer-assisted manufacturing process, such as 3-D printing based on a STL file generated by the processing system and provided to a 3-D printing system. In another embodiment, a dental appliance may be formed by a thermoforming process, e.g., a polymer-based material thermoformed over a mold of the dentition.

In certain embodiments, each constraining feature, e.g., shelf or ridge and/or hook or barb-type elements, may be formed integrally with the clear aligner. In other embodiments, such features may be formed separately from the appliance and attached or secured to the appliance. For example, in an embodiment, a constraining feature may be fabricated on a thin substrate which may be adhered or bonding to the appliance, e.g., clear aligner. The thin substrate may include the same material as the appliance or it may include a different material, such as a different polymer material.

As used herein, the terms "constrain" or "constraining" with regard to movement are not intended to exclude or tightly restrict movement, and generally permit or allow for at least some movement. For example, the constraining features provide for a planned repositioning of the mandible, yet the mandible remains free to open and close so it is not tightly constrained; the "constraining" features still permit or allow for movement of the mandible.

The use of the terms "a" and "an" and "the" and "at least one" and similar referents in the context of describing the disclosed subject matter (especially in the context of the following claims) are to be construed to cover both the singular and the plural, unless otherwise indicated herein or clearly contradicted by context. The use of the term "at least one" followed by a list of one or more items (for example, "at least one of A and B") is to be construed to mean one item selected from the listed items (A or B) or any combination of two or more of the listed items (A and B), unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or example language (e.g., "such as") provided herein, is intended merely to better illuminate the disclosed subject matter and does not pose a limitation on the scope of the invention unless otherwise claimed. No language in the specification should be construed as indicating any non-claimed element as essential to the practice of the invention.

Certain embodiments are described herein. Variations of those embodiments may become apparent to those of ordinary skill in the art upon reading the foregoing description. The present invention is set out in the appended claims.

## Claims

1. A method of fabricating at least one removable orthodontic appliance for repositioning a mandible (25) of an individual, the method comprising:
acquiring a digital model of a dentition and/or a craniofacial anatomy of the individual, the digital model including a representation of a condyle (10) or an incisal guidance or both the condyle (10) and the incisal guidance;
calculating, based on the digital model, a slope (15) of the condyle or a slope (35) of the incisal guidance or both the slope (15) of the condyle and the slope (35) of the incisal guidance by selecting at least two points (x₁, x₂, y₁ and y₂) on the incisal guidance and/or the mandibular condyle (10); and
fabricating at least one removable orthodontic appliance including a feature configured to constrain a posterior or anterior movement of the mandible (25) relative to the maxilla when worn by the individual, wherein a position of the feature is determined based on the slope (15) of the condyle or the slope (35) of the incisal guidance or both the slope (15) the condyle and the slope (35) of the incisal guidance.

2. The method of claim 1, wherein the acquiring the digital model of the dentition and/or the craniofacial anatomy includes imaging using a radiographic imaging technique, an MRI technique, an ultrasound imaging technique and/or a direct intraoral scanning technique.

3. The method of claim 1, wherein the slope of the condyle is calculated using the equation m_{c} = (y₂-y₁)/(x₂-x₁), wherein x₁, x₂, y₁ and y₂ are positional coordinates of the condyle.

4. The method of claim 3, wherein the positional coordinates of the condyle are determined based on input received from a user or automatically using a best fit algorithm applied to a geometry of the dentition and/or a craniofacial anatomy in the digital model.

5. The method of claim 1, wherein the slope of the incisal guidance is calculated using the equation mi = (y₂-y₁)/(x₂-x₁), wherein x₁, x₂, y₁ and y₂ are positional coordinates of the incisal guidance.

6. The method of claim 5, wherein the positional coordinates of the incisal guidance are determined based on input received from a user or automatically based on a best fit algorithm.

7. The method of claim 1, wherein the at least one removable orthodontic appliance is configured to mate with a geometry of a maxillary dentition and adjacent gum tissue of the individual.

8. The method of claim 1, wherein the fabricating at least one removable orthodontic appliance includes fabricating at least one complementary removable orthodontic appliance, wherein the at least one complementary removable orthodontic appliance is configured to mate with a geometry of a mandibular dentition and adjacent gum tissue of the individual and is configured to interact with the feature of the at least one removable orthodontic appliance to constrain the posterior or anterior movement of the mandible relative to the maxillae.

9. The method of claim 8, wherein the feature of the at least one removable orthodontic appliance includes a barb or hook element, and wherein the at least one complementary removable orthodontic appliance includes a complementary barb or hook element configured to removably engage with the barb or hook element of the at least one removable orthodontic appliance.

10. The method of claim 1, wherein the fabricating at least one removable orthodontic appliance includes fabricating a series of removable orthodontic appliances designed to reposition the mandible from an initial position relative to the maxillae to a new position relative to the maxillae, wherein the position of the feature of each subsequent appliance includes an incremental positional change relative to the positions of the feature of a prior appliance.

11. The method of claim 1, wherein the at least one removable orthodontic appliance includes a clear aligner.

12. A removable orthodontic appliance (50) configured to reposition a mandible (25) of an individual, the appliance (50) comprising:
a structure configured to mate with a geometry of a maxillary dentition and adjacent gum tissue of the individual; and
a feature configured to constrain a posterior or anterior movement of the mandible (25) relative to the maxilla when the appliance is worn by the individual, wherein the feature is located on the structure in a position based on a slope (15) of a condyle of the individual or a slope (35) of an incisal guidance of the individual or both the slope (15) of the condyle and the slope (35) of the incisal guidance, wherein the slope (15) of the condyle or a slope (35) of the incisal guidance or both the slope (15) of the condyle and the slope (35) of the incisal guidance are calculated by selecting at least two points (x₁, x₂, y₁ and y₂) on the incisal guidance and/or the mandibular condyle (10).

13. The removable orthodontic appliance of claim 12, wherein the feature includes at least one ridge or shelf located proximal a lingual surface of the incisal guidance.

14. A removable orthodontic appliance pair (50, 55) configured to reposition a mandible (25) of an individual, the appliance pair (50, 55) comprising:
a first structure configured to mate with a geometry of a maxillary dentition and adjacent gum tissue of the individual, the first structure including a first feature located on an external surface of the first structure; and
a second structure configured to mate with a geometry of a mandibular dentition and adjacent gum tissue of the individual;
wherein the first feature is configured to constrain a posterior or anterior movement of the mandible (25) relative to the maxillae when the appliance pair (50, 55) is worn by the individual,
wherein the first feature is located on the first structure in a position based on a slope (15) of a condyle of the individual or a slope (35) of an incisal guidance of the individual or both the slope (15) of the condyle and the slope (35) of the incisal guidance, wherein the slope (15) of the condyle or a slope (35) of the incisal guidance or both the slope (15) of the condyle and the slope (35) of the incisal guidance are calculated by selecting at least two points (x1, x2, y1, and y2) on the incisal guidance and/or the mandibular condyle (10).

15. The appliance pair of claim 14, wherein the first feature includes a barb or hook element, and wherein the second structure includes a second feature located on an external surface of the second structure, wherein the second feature includes a complementary barb or hook element configured to removably engage with the barb or hook element of the first feature.

## Patentansprüche

1. Verfahren zum Herstellen mindestens einer abnehmbaren orthodontischen Vorrichtung zum Repositionieren eines Unterkiefers (25) eines Individuums, wobei das Verfahren die Schritte aufweist:
Erfassen eines digitalen Modells einer Dentition und/oder einer kraniofazialen Anatomie des Individuums, wobei das digitale Modell eine Darstellung eines Kondylus (10) oder einer Inzisalführung oder sowohl des Kondylus (10) als auch der Inzisalführung enthält;
Berechnen einer Neigung (15) des Kondylus oder einer Neigung (35) der Inzisalführung oder sowohl der Neigung (15) des Kondylus als auch der Neigung (35) der Inzisalführung basierend auf dem digitalen Modell durch Auswählen von mindestens zwei Punkten (x₁, x₂, y₁ und y₂) auf der Inzisalführung und/oder dem Unterkieferkondylus (10); und
Herstellen mindestens einer abnehmbaren orthodontischen Vorrichtung, die ein Merkmal aufweist, das dafür konfiguriert ist, eine posteriore oder anteriore Bewegung des Unterkiefers (25) relativ zum Oberkiefer zu begrenzen, wenn sie durch das Individuum getragen wird, wobei eine Position des Merkmals basierend auf der Neigung (15) des Kondylus oder der Neigung (35) der Inzisalführung oder sowohl der Neigung (15) des Kondylus als auch der Neigung (35) der Inzisalführung bestimmt wird.

2. Verfahren nach Anspruch 1, wobei das Erfassen des digitalen Modells der Dentition und/oder der kraniofazialen Anatomie eine Bildgebung unter Verwendung eines Röntgenbildgebungsverfahrens, eines MRT-Verfahrens, eines Ultraschallbildgebungsverfahrens und/oder eines direkten intraoralen Scanverfahrens aufweist.

3. Verfahren nach Anspruch 1, wobei die Neigung des Kondylus unter Verwendung der Gleichung m_{c} = (y₂ - y₁)/(x₂ - x₁) berechnet wird, wobei x₁, x₂, y₁ und y₂ Positionskoordinaten des Kondylus sind.

4. Verfahren nach Anspruch 3, wobei die Positionskoordinaten des Kondylus basierend auf Eingaben eines Benutzers oder automatisch unter Verwendung eines Best-Fit-Algorithmus bestimmt werden, der auf eine Geometrie der Dentition und/oder einer kraniofazialen Anatomie in dem digitalen Modell angewendet wird.

5. Verfahren nach Anspruch 1, wobei die Neigung der Inzisalführung unter Verwendung der Gleichung mᵢ = (y₂ - y₁)/(x₂ - x₁) berechnet wird, wobei x₁, x₂, y₁ und y₂ Positionskoordinaten der Inzisalführung sind.

6. Verfahren nach Anspruch 5, wobei die Positionskoordinaten der Inzisalführung basierend auf einer von einem Benutzer empfangenen Eingabe oder automatisch basierend auf einem Best-Fit-Algorithmus bestimmt werden.

7. Verfahren nach Anspruch 1, wobei die mindestens eine abnehmbare orthodontische Vorrichtung derart konfiguriert ist, dass sie einer Geometrie einer Oberkieferdentition und des angrenzenden Zahnfleischgewebes des Individuums angepasst ist.

8. Verfahren nach Anspruch 1, wobei das Herstellen mindestens einer abnehmbaren orthodontischen Vorrichtung das Herstellen mindestens einer komplementären abnehmbaren orthodontischen Vorrichtung aufweist, wobei die mindestens eine komplementäre abnehmbare orthodontische Vorrichtung derart konfiguriert ist, dass sie einer Geometrie einer Unterkieferdentition und angrenzendem Zahnfleischgewebe des Individuums angepasst ist, und dafür konfiguriert ist, mit dem Merkmal der mindestens einen abnehmbaren orthodontischen Vorrichtung zusammenzuwirken, um die posteriore oder anteriore Bewegung des Unterkiefers relativ zum Oberkiefer zu begrenzen.

9. Verfahren nach Anspruch 8, wobei das Merkmal der mindestens einen abnehmbaren orthodontischen Vorrichtung ein Widerhaken- oder Hakenelement aufweist, und wobei die mindestens eine komplementäre abnehmbare orthodontische Vorrichtung ein komplementäres Widerhaken- oder Hakenelement aufweist, das dafür konfiguriert ist, mit dem Widerhaken- oder Hakenelement der mindestens einen abnehmbaren orthodontischen Vorrichtung lösbar in Eingriff zu kommen.

10. Verfahren nach Anspruch 1, wobei das Herstellen mindestens einer abnehmbaren orthodontischen Vorrichtung das Herstellen einer Serie von abnehmbaren orthodontischen Vorrichtungen aufweist, die derart konfiguriert sind, dass sie den Unterkiefer von einer Anfangsposition relativ zum Oberkiefer in eine neue Position relativ zum Oberkiefer repositionieren, wobei die Position des Merkmals jeder nachfolgenden Vorrichtung eine inkrementelle Positionsänderung relativ zu den Positionen des Merkmals einer vorherigen Vorrichtung aufweist.

11. Verfahren nach Anspruch 1, wobei die mindestens eine abnehmbare orthodontische Vorrichtung einen Clear-Aligner aufweist.

12. Abnehmbare orthodontische Vorrichtung (50), die dafür konfiguriert ist, einen Unterkiefer (25) eines Individuums zu repositionieren, wobei die Vorrichtung (50) aufweist:
eine Struktur, die derart konfiguriert ist, dass sie einer Geometrie einer Oberkieferdentition und angrenzendem Zahnfleischgewebe des Individuums angepasst ist; und
ein Merkmal, das dafür konfiguriert ist, eine posteriore oder anteriore Bewegung des Unterkiefers (25) relativ zum Oberkiefer zu begrenzen, wenn die Vorrichtung durch das Individuum getragen wird, wobei das Merkmal auf der Struktur in einer Position angeordnet ist, die auf einer Neigung (15) eines Kondylus des Individuums oder einer Neigung (35) einer Inzisalführung des Individuums oder sowohl auf der Neigung (15) des Kondylus als auch auf der Neigung (35) der Inzisalführung basiert, wobei die Neigung (15) des Kondylus oder eine Neigung (35) der Inzisalführung oder sowohl die Neigung (15) des Kondylus als auch die Neigung (35) der Inzisalführung durch Auswählen mindestens zweier Punkte (x₁, x₂, y₁ und y₂) auf der Inzisalführung und/oder dem Unterkieferkondylus (10) berechnet werden.

13. Abnehmbare orthodontische Vorrichtung nach Anspruch 12, wobei das Merkmal mindestens einen Steg oder einen Ansatz aufweist, der proximal von einer lingualen Oberfläche der Inzisalführung angeordnet ist.

14. Abnehmbares orthodontisches Vorrichtungspaar (50, 55), das dafür konfiguriert ist, einen Unterkiefer (25) eines Individuums zu repositionieren, wobei das Vorrichtungspaar (50, 55) aufweist:
eine erste Struktur, die derart konfiguriert ist, dass sie einer Geometrie einer Oberkieferdentition und angrenzendem Zahnfleischgewebe des Individuums angepasst ist, wobei die erste Struktur ein erstes Merkmal aufweist, das auf einer Außenfläche der ersten Struktur angeordnet ist; und
eine zweite Struktur, die derart konfiguriert ist, dass sie einer Geometrie einer Unterkieferdentition und angrenzendem Zahnfleischgewebe des Individuums angepasst ist, und
wobei das erste Merkmal dafür konfiguriert ist, eine posteriore oder anteriore Bewegung des Unterkiefers (25) relativ zum Oberkiefer zu begrenzen, wenn das Vorrichtungspaar (50, 55) durch das Individuum getragen wird,
wobei das erste Merkmal auf der ersten Struktur in einer Position angeordnet ist, die auf einer Neigung (15) eines Kondylus des Individuums oder einer Neigung (35) einer Inzisalführung des Individuums oder sowohl der Neigung (15) des Kondylus als auch der Neigung (35) der Inzisalführung basiert, wobei die Neigung (15) des Kondylus oder die Neigung (35) der Inzisalführung oder sowohl die Neigung (15) des Kondylus als auch die Neigung (35) der Inzisalführung durch Auswählen von mindestens zwei Punkten (x₁, x₂, y₁ und y₂) auf der Inzisalführung und/oder dem Unterkieferkondylus (10) berechnet werden.

15. Vorrichtungspaar nach Anspruch 14, wobei das erste Merkmal ein Widerhaken- oder Hakenelement aufweist, und wobei die zweite Struktur ein zweites Merkmal aufweist, das auf einer Außenfläche der zweiten Struktur angeordnet ist, wobei das zweite Merkmal ein komplementäres Widerhaken- oder Hakenelement aufweist, das dafür konfiguriert ist, mit dem Widerhaken- oder Hakenelement des ersten Merkmals lösbar in Eingriff zu kommen.

## Revendications

1. Procédé de fabrication d'au moins un appareil orthodontique amovible pour le repositionnement d'une mandibule (25) d'un individu, le procédé comprenant :
l'acquisition d'un modèle numérique d'une dentition et/ou d'une anatomie craniofaciale de l'individu, le modèle numérique comprenant une représentation d'un condyle (10) ou d'un guide incisif ou à la fois du condyle (10) et du guide incisif ;
le calcul, à partir du modèle numérique, d'une pente (15) du condyle ou d'une pente (35) du guide incisif ou à la fois de la pente (15) du condyle et de la pente (35) du guide incisif par sélection d'au moins deux points (x₁, x₂, y₁ et y₂) du guide incisif et/ou du condyle mandibulaire (10) ; et
la fabrication d'au moins un appareil orthodontique amovible comprenant une composante conçue pour contraindre un mouvement postérieur ou antérieur de la mandibule (25) par rapport au maxillaire lorsqu'il est porté par l'individu, dans lequel une position de la composante est déterminée à partir de la pente (15) du condyle ou de la pente (35) du guide incisif ou à la fois de la pente (15) du condyle et de la pente (35) du guide incisif.

2. Procédé selon la revendication 1, dans lequel l'acquisition du modèle numérique de la dentition et/ou de l'anatomie craniofaciale comprend l'analyse par imagerie en utilisant une technique d'imagerie radiographique, une technique d'IRM, une technique d'imagerie par ultrasons et/ou une technique de balayage intra-oral direct.

3. Procédé selon la revendication 1, dans lequel la pente du condyle est calculée en utilisant l'équation m_{c} = (y₂-y₁)/(x₂-x₁), dans lequel x₁, x₂, y₁ et y₂ sont les coordonnées de position du condyle.

4. Procédé selon la revendication 3, dans lequel les coordonnées de position du condyle sont déterminées à partir d'une entrée reçue de la part d'un utilisateur ou en utilisant automatiquement un algorithme de meilleur ajustement appliqué à une géométrie de la dentition et/ou de l'anatomie craniofaciale dans le modèle numérique.

5. Procédé selon la revendication 1, dans lequel la pente du guide incisif est calculée en utilisant l'équation mi = (y₂-y₁)/(x₂-x₁), dans lequel x₁, x₂, y₁ et y₂ sont les coordonnées de position du guide incisif.

6. Procédé selon la revendication 5, dans lequel les coordonnées de position du guide incisif sont déterminées à partir d'une entrée reçue de la part d'un utilisateur ou automatiquement à partir d'un algorithme de meilleur ajustement.

7. Procédé selon la revendication 1, dans lequel l'au moins un appareil orthodontique amovible est conçu pour s'accoupler avec une géométrie d'une dentition maxillaire et le tissu gingival adjacent de l'individu.

8. Procédé selon la revendication 1, dans lequel la fabrication d'au moins un appareil orthodontique amovible comprend la fabrication d'au moins un appareil orthodontique amovible complémentaire, dans lequel l'au moins un appareil orthodontique amovible complémentaire est conçu pour s'accoupler avec une géométrie d'une dentition mandibulaire et du tissu gingival adjacent de l'individu et est conçu pour interagir avec la composante de l'au moins un appareil orthodontique amovible pour contraindre le mouvement postérieur ou antérieur de la mandibule par rapport au maxillaire.

9. Procédé selon la revendication 8, dans lequel la composante de l'au moins un appareil orthodontique amovible comprend un élément d'ardillon ou de crochet, et dans lequel l'au moins un appareil orthodontique amovible complémentaire comprend un élément d'ardillon ou de crochet complémentaire conçu pour venir en prise de manière amovible avec l'élément d'ardillon ou de crochet de l'au moins un appareil orthodontique amovible.

10. Procédé selon la revendication 1, dans lequel la fabrication d'au moins un appareil orthodontique amovible comprend la fabrication d'une série d'appareils orthodontiques amovibles conçus pour repositionner la mandibule depuis une position initiale par rapport au maxillaire jusqu'à une nouvelle position par rapport au maxillaire, dans lequel la position de la composante de chaque appareil consécutif comprend un changement de position incrémentiel par rapport aux positions de la composante d'un appareil précédent.

11. Procédé selon la revendication 1, dans lequel l'au moins un appareil orthodontique amovible comprend un aligneur transparent.

12. Appareil orthodontique amovible (50) conçu pour repositionner une mandibule (25) d'un individu, l'appareil (50) comprenant :
une structure conçue pour s'accoupler avec une géométrie d'une dentition maxillaire et du tissu gingival adjacent de l'individu ; et
une composante conçue pour contraindre un mouvement postérieur ou antérieur de la mandibule (25) par rapport au maxillaire lorsque l'appareil est porté par l'individu, dans lequel la composante est située sur la structure dans une position basée sur une pente (15) d'un condyle de l'individu ou une pente (35) d'un guide incisif de l'individu ou à la fois sur la pente (15) du condyle et la pente (35) du guide incisif, dans lequel la pente (15) du condyle ou une pente (35) du guide incisif ou à la fois la pente (15) du condyle et la pente (35) du guide incisif sont calculées par sélection d'au moins deux points (x₁, x₂, y₁ et y₂) sur le guide incisif et/ou le condyle mandibulaire (10).

13. Appareil orthodontique amovible selon la revendication 12, dans lequel la composante comprend au moins une crête ou une face vestibulaire située de manière proximale vis-à-vis d'une surface linguale du guide incisif.

14. Couple d'appareils orthodontiques amovibles (50, 55) conçu pour repositionner une mandibule (25) d'un individu, la paire d'appareils (50, 55) comprenant :
une première structure conçue pour s'accoupler avec une géométrie d'une dentition maxillaire et du tissu gingival adjacent de l'individu, la première structure comprenant une première composante située sur une surface externe de la première structure ; et
une seconde structure conçue pour s'accoupler avec une géométrie d'une dentition mandibulaire et du tissu gingival adjacent de l'individu ;
dans lequel la première composante est conçue pour contraindre un mouvement postérieur ou antérieur de la mandibule (25) par rapport au maxillaire, lorsque le couple d'appareils (50, 55) est porté par l'individu,
dans lequel la première composante est située sur une première structure dans une position basée sur une pente (15) d'un condyle de l'individu ou une pente (35) d'un guide incisif de l'individu ou à la fois sur la pente (15) du condyle et la pente (35) du guide incisif, dans lequel la pente (15) du condyle ou une pente (35) du guide incisif ou à la fois la pente (15) du condyle et la pente (35) du guide incisif sont calculées par sélection d'au moins deux points (x₁, x₂, y₁ et y₂) sur le guide incisif et/ou le condyle mandibulaire (10).

15. Couple d'appareils selon la revendication 14, dans lequel la première composante comprend un élément d'ardillon ou de crochet, et dans lequel la seconde structure comprend une seconde composante située sur une surface externe de la seconde structure, dans lequel la seconde composante comprend un élément d'ardillon ou de crochet complémentaire conçu pour venir en prise de manière amovible avec l'élément d'ardillon ou de crochet de la première composante.
